# EUROPEAN PATENT APPLICATION

(11) **EP 4 818 803 A1**
(43) Date of publication of application: **07.10.2026**
(21) Application number: 25190613.7
(22) Date of filing: 21.07.2025
(51) Int. Cl.: G03B 30/00, G02B 27/00, B60S 1/04, G03B 17/08, H04N 23/57

(54) **IMAGE CAPTURING MODULE APPLIED TO PANORAMIC SYSTEM FOR VEHICLE**

(30) Priority: 02.04.2025 TW 114112773
(71) Applicant: Wistron Corporation, New Taipei City 22181 (TW)
(72) Inventor: LIU, Hsueh Teng, 22181 New Taipei City (TW); JEN, Tsu Yin, 22181 New Taipei City (TW); YU, Lee Hua, 22181 New Taipei City (TW); YANG, Yu Hung, 22181 New Taipei City (TW); HUANG, Cheng Pin, 22181 New Taipei City (TW); HUANG, Kung Chih, 22181 New Taipei City (TW); YEN, Wei Cheng, 22181 New Taipei City (TW); TSAI, Shang Ju, 22181 New Taipei City (TW)
(74) Representative: Becker, Eberhard

(57) **Abstract**

An image capturing module includes a main body, an image capturing device, a brush component, a transparent plate, and a driving assembly. The image capturing device is disposed on the main body. The brush component is disposed on the main body. The transparent plate is movably disposed on the main body along an axis and has a surface. The surface contacts the brush component, and a normal of the surface is substantially orthogonal to the axis. The driving assembly is disposed on the main body and is used to drive the transparent plate to move back and forth along the axis.

## Description

### BACKGROUND

### Technical Field

The disclosure relates to an optical module, and more particularly to an image capturing module.

### Description of Related Art

With the development of automobile technology, more and more new car models are equipped with functions that rely on image sensing technology, such as autonomous driving systems. A very important technology is the 360-degree panoramic viewing system, which aims to improve driving safety and convenience through providing the driver with a complete view of the environment. The 360-degree panoramic viewing system requires the configuration of multiple vehicle-mounted cameras at multiple positions around a vehicle body. Image data captured by each vehicle-mounted camera is transmitted to a computer for vehicle in real time. The computer for vehicle processes and synthesizes the image data from each vehicle-mounted camera by an algorithm to generate a 360-degree panoramic view displayed on a display screen in a cockpit, so that a driver can grasp environmental conditions around a vehicle at a glance.

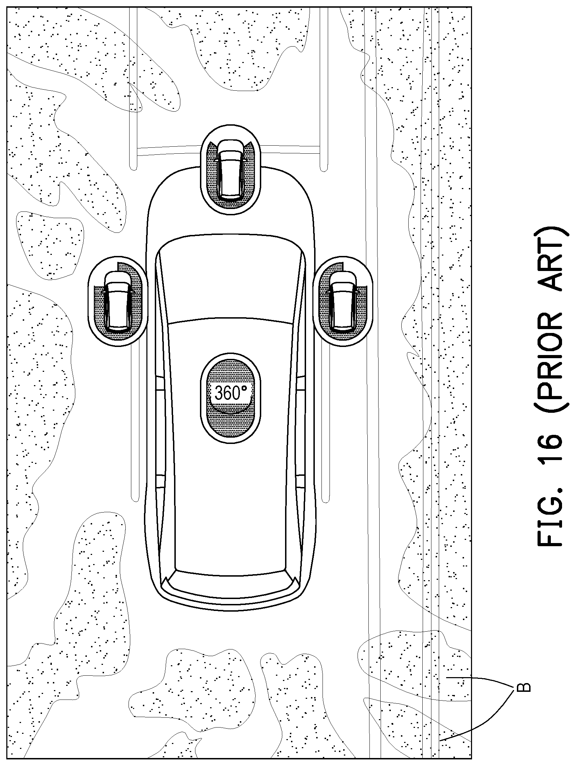

However, during a driving process, the vehicle-mounted cameras exposed around the vehicle body are often affected by environmental factors such as raindrops, mud, dust, or snowflakes, causing surfaces of the vehicle-mounted cameras to be blurred and dirty, which not only weakens the visual effects of the cameras and affects the image clarity, but also seriously affects the accuracy of the driving assistance system, thereby threatening driving safety and harming the life of the driver or pedestrians. For example, a panoramic image displayed by the 360-degree panoramic viewing system may be unclear due to stains B such as raindrops, mud, and dust, as shown in FIG. 16. Therefore, how to keep the vehicle-mounted cameras clean during driving is an important issue at present.

### SUMMARY

The disclosure provides an image capturing module, which may instantly clean a surface of a camera to maintain clarity of an image captured by the image capturing module.

An image capturing module of the disclosure includes a main body, an image capturing device, a brush component, a transparent plate, and a driving assembly. The image capturing device is disposed on the main body. The brush component is disposed on the main body. The transparent plate is movably disposed on the main body along an axis and has a surface. The surface contacts the brush component, and a normal direction of the surface is substantially orthogonal to the axis. The driving assembly is disposed on the main body and is used to drive the transparent plate to move back and forth along the axis.

In an embodiment of the disclosure, the main body includes a first holder and a second holder, the second holder is mounted on the first holder, the brush component is disposed on the first holder, the image capturing device and the driving assembly are disposed on the second holder, and the transparent plate is movably disposed between the first holder and the second holder along the axis.

In an embodiment of the disclosure, the driving assembly includes a motor and an active wheel, the motor is coupled to the active wheel, the active wheel is rotatably disposed on the main body and contacts the transparent plate, and the motor drives the active wheel to rotate to drive the transparent plate to move along the axis.

In an embodiment of the disclosure, the driving assembly further includes a passive wheel, and the passive wheel is rotatably disposed on the main body and contacts the transparent plate.

In an embodiment of the disclosure, the image capturing module further includes a control device. The control device is coupled to the driving assembly, and the control device is used to control the driving assembly to drive the transparent plate to move along a first direction and a second direction opposite to the first direction.

In an embodiment of the disclosure, the control device is used to generate a control signal based on the transparent plate continuously moving along the first direction for a predetermined time length, and the driving assembly is used to control the transparent plate to move along the second direction according to the control signal.

In an embodiment of the disclosure, the image capturing module further includes a sensor. The sensor is coupled to the control device, the sensor is used to sense that the transparent plate moves along the first direction to a predetermined state to generate a sensing signal, the control device is used to generate a control signal according to the sensing signal, and the driving assembly is used to drive the transparent plate to move along the second direction according to the control signal.

In an embodiment of the disclosure, the image capturing module further includes a recording device. The recording device is coupled to the driving assembly and the control device, the recording device is used to record a cumulative driving number of the driving assembly, and the control device is used to generate a prompt signal when the cumulative driving number reaches a predetermined value.

In an embodiment of the disclosure, the control device is used to generate an activation signal based on that an image capturing quality of the image capturing device is lower than a predetermined quality, the driving assembly is used to drive the transparent plate according to the activation signal, the control device is used to generate a stop signal based on that an image capturing quality of the image capturing device is higher than the predetermined quality, and the driving assembly is used to stop driving the transparent plate according to the stop signal.

In an embodiment of the disclosure, the image capturing module is a panoramic camera for vehicle.

An image capturing module of the disclosure includes a main body, an image capturing device, a brush component, a frame body, a transparent plate, a first driving assembly, and a second driving assembly. The image capturing device is disposed on the main body. The brush component is disposed on the main body. The frame body is movably disposed on the main body along an axis. The transparent plate is movably disposed on the frame body along another axis and contacts the brush component. The first driving assembly is disposed on the main body and is used to drive the frame body to move along the axis. The second driving assembly is disposed on the frame body and is used to drive the transparent plate to move along the another axis.

In an embodiment of the disclosure, the main body includes a first holder and a second holder, the second holder is mounted on the first holder, the brush component and the first driving assembly are disposed on the first holder, and the image capturing device is disposed on the second holder.

In an embodiment of the disclosure, the frame body includes a third holder and a fourth holder, the third holder is movably disposed on the first holder along the axis, the fourth holder is mounted on the third holder, the transparent plate is movably disposed between the third holder and the fourth holder along the another axis, and the second driving assembly is disposed on the third holder.

In an embodiment of the disclosure, the image capturing module further includes another brush component, and the another brush component is disposed on the third holder and contacts the transparent plate.

In an embodiment of the disclosure, the first driving assembly includes a motor and an active worm, the motor is coupled to the active worm, the active worm is rotatably disposed on the main body and contacts the frame body, and the motor is used to drive the active worm to rotate to drive the frame body to move along the axis.

In an embodiment of the disclosure, the first driving assembly further includes a passive worm, and the passive worm is rotatably disposed on the main body and contacts the frame body.

In an embodiment of the disclosure, the second driving assembly includes a motor and an active wheel, the motor is coupled to the active wheel, the active wheel is rotatably disposed on the frame body and contacts the transparent plate, and the motor drives the active wheel to rotate to drive the transparent plate to move along the another axis.

In an embodiment of the disclosure, the second driving assembly further includes a passive wheel, and the passive wheel is rotatably disposed on the frame body and contacts the transparent plate.

In an embodiment of the disclosure, the image capturing module is a panoramic camera for vehicle.

An image capturing module of the disclosure includes a main body, an image capturing device, a brush component, a transparent plate, and a driving assembly. The image capturing device is disposed on the main body. The brush component is disposed on the main body. The transparent plate is rotatably disposed on the main body along an axis and contacts the brush component. The driving assembly is disposed on the main body and is used to drive the transparent plate to rotate along the axis.

In an embodiment of the disclosure, the main body includes a first holder and a second holder, the second holder is mounted on the first holder, the brush component is disposed on the first holder, the image capturing device and the driving assembly are disposed on the second holder, and the transparent plate is rotatably disposed between the first holder and the second holder along the axis.

In an embodiment of the disclosure, the driving assembly includes a motor and a bevel gear set, the bevel gear set is coupled between the motor and the transparent plate, and the motor is used to drive the bevel gear set to rotate to drive the transparent plate to rotate along the axis.

In an embodiment of the disclosure, the image capturing module is a panoramic camera for vehicle.

### BRIEF DESCRIPTION OF THE DRAWINGS

FIG. 1 shows an image capturing module installed on a front windshield of a vehicle according to an embodiment of the disclosure.
FIG. 2 is a partial rear view of the front windshield and the image capturing module of FIG. 1.
FIG. 3 is an exploded view of the front windshield and the image capturing module of FIG. 1.
FIG. 4 is a schematic view of a partial structure of the front windshield and the image capturing module of FIG. 1.
FIG. 5 shows a movement of a transparent plate of FIG. 2.
FIG. 6 is a block schematic view of some components of the image capturing module of FIG. 1.
FIG. 7 and FIG. 8 are flowcharts of an operation of the image capturing module of FIG. 1.
FIG. 9 shows an image capturing module installed on a rear shell of a vehicle according to another embodiment of the disclosure.
FIG. 10 is an exploded view of the rear shell and the image capturing module of FIG. 9.
FIG. 11 and FIG. 12 show a movement of a transparent plate of FIG. 9.
FIG. 13 shows some components of the image capturing module of FIG. 9.
FIG. 14 shows an image capturing module installed on a rear shell of a vehicle according to another embodiment of the disclosure.
FIG. 15 is an exploded view of the rear shell and the image capturing module of FIG. 14.
FIG. 16 shows a panoramic image affected by stains as displayed by a conventional 360-degree panoramic viewing system.

### DESCRIPTION OF THE EMBODIMENTS

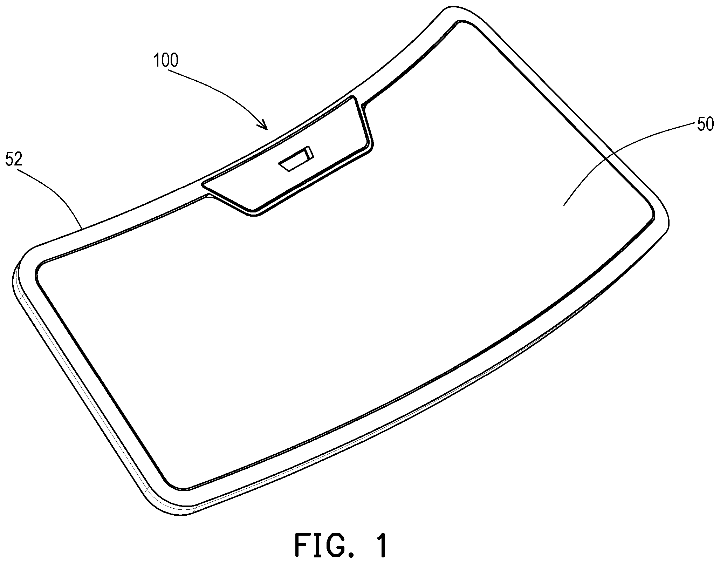

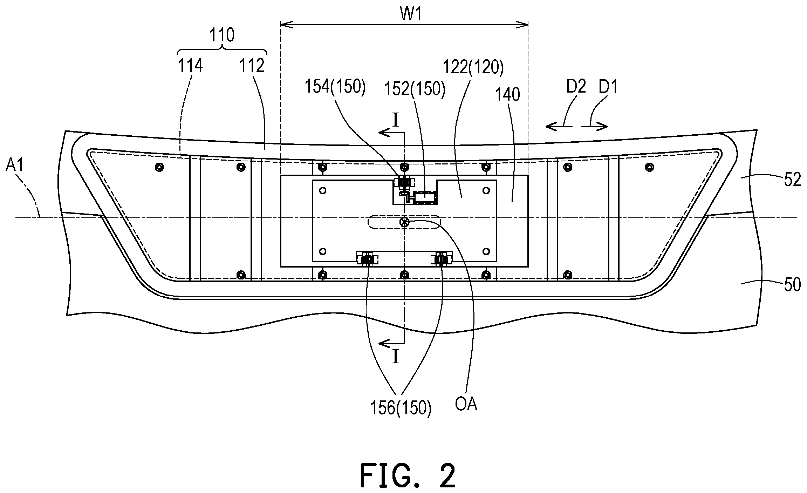

FIG. 1 shows an image capturing module installed on a front windshield of a vehicle according to an embodiment of the disclosure. FIG. 2 is a partial rear view of the front windshield and the image capturing module of FIG. 1. Please refer to FIG. 1 and FIG. 2. An image capturing module 100 of the embodiment is installed, for example, at an upper edge of a front windshield 50 of the vehicle to capture an image in front of the vehicle. The image capturing module 100 is, for example, a panoramic camera for vehicle.

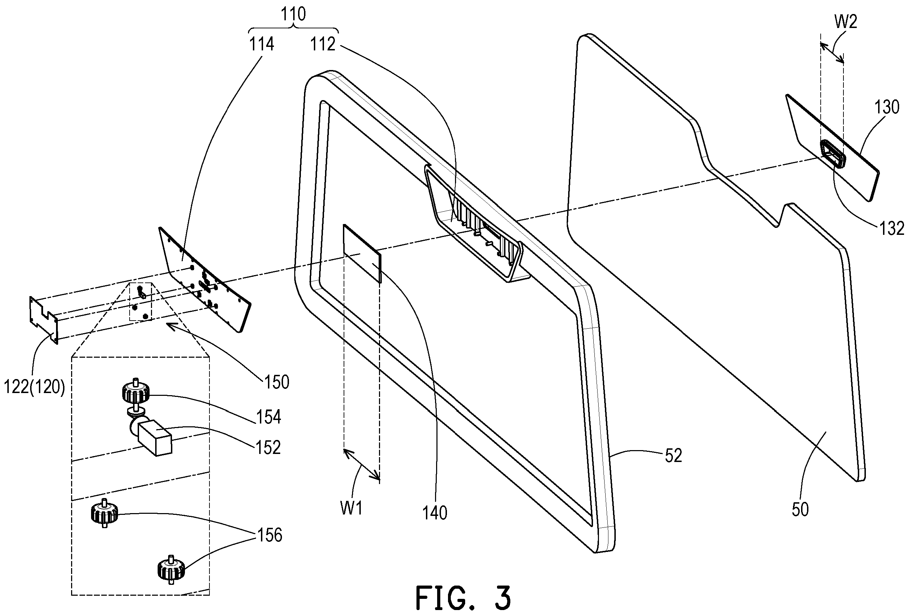

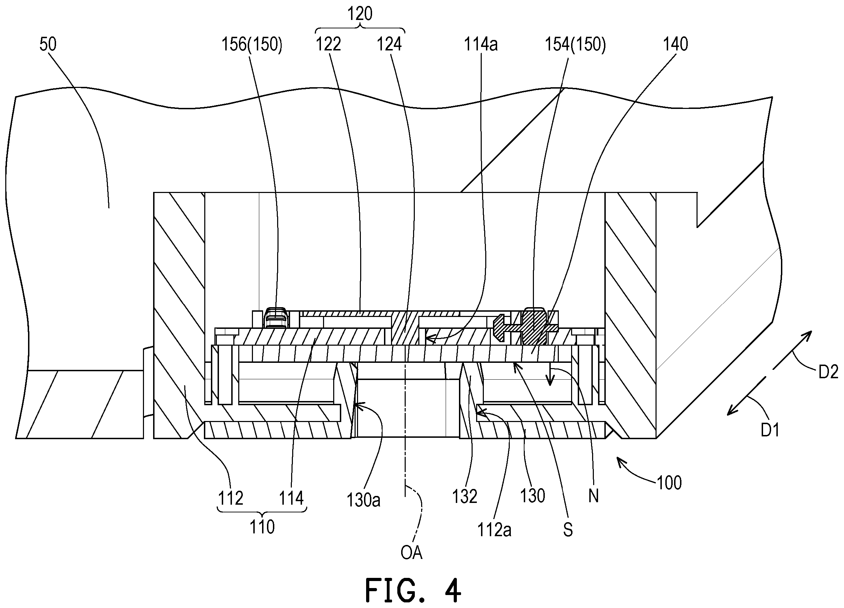

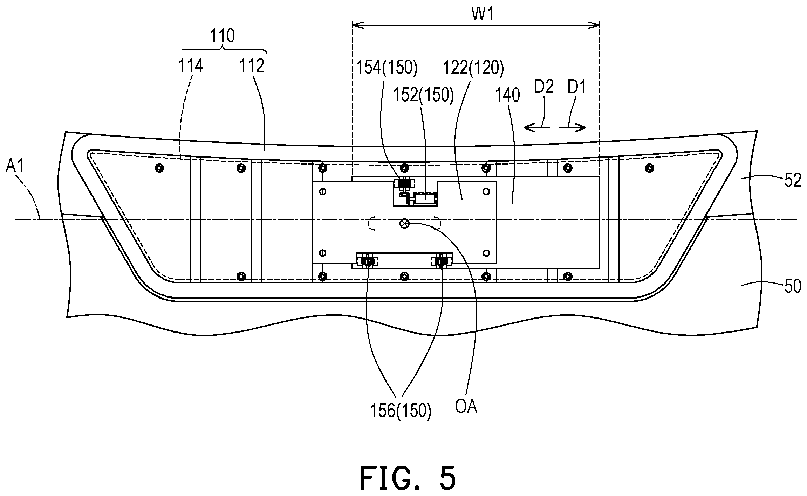

FIG. 3 is an exploded view of the front windshield and the image capturing module of FIG. 1. FIG. 4 is a schematic view of a partial structure of the front windshield and the image capturing module of FIG. 1, wherein a cross section corresponds to a line I-I of FIG. 2. FIG. 5 shows a movement of a transparent plate of FIG. 2. Please refer to FIG. 2 to FIG. 4. The image capturing module 100 includes a main body 110, an image capturing device 120, a brush component 130, a transparent plate 140, and a driving assembly 150. The image capturing device 120 is disposed on the main body 110. The brush component 130 is, for example, a rubber member and is disposed on the main body 110. The transparent plate 140 is, for example, a glass plate and is movably disposed on the main body 110 along an axis A1 and has a surface S (marked in FIG. 4). The surface S contacts the brush component 130, and a normal direction N (marked in FIG. 4) of the surface S is substantially orthogonal to the axis A1 (marked in FIG. 2 and FIG. 5). The driving assembly 150 is disposed on the main body 110 and is used to drive the transparent plate 140 to move from a state shown in FIG. 2 to a state shown in FIG. 5 along the axis A1.

As described above, in the image capturing module 100 of the embodiment, the transparent plate 140 as a surface of a camera is configured to be driven by the driving assembly 150 to move along the axis A1, and the image capturing module 100 is provided with the brush component 130 orthogonally contacting the surface S of the transparent plate 140. Accordingly, as the transparent plate 140 moves along the axis A1, the brush component 130 continuously contacts the transparent plate 140 and generates a relative displacement with the transparent plate 140 during the movement process of the transparent plate 140, so that dirt on the surface of the transparent plate 140 is scraped off by the brush component 130 to instantly clean the surface of the camera, so as to maintain clarity of an image captured by the image capturing module 100. Furthermore, since the image capturing module 100 of the embodiment is configured with the transparent plate 140 being movable and the brush component 130 being stationary, the case where a brush component moves and blocks the view of an image capturing device during a cleaning process will not happen, so that the image capturing module 100 can continuously capture images.

In detail, the main body 110 of the embodiment includes a first holder 112 and a second holder 114. The first holder 112 is, for example, integrally connected to an outer frame 52 of the front windshield 50. The second holder 114 is mounted on the first holder 112 and has an opening 114a (marked in FIG. 4). The brush component 130 is disposed on the first holder 112. The image capturing device 120 includes a substrate 122 and an image capturing apparatus 124. The substrate 122 is disposed on the second holder 114. The image capturing apparatus 124 is disposed on the substrate 122 and corresponds to the opening 114a. The driving assembly 150 is disposed on the second holder 114. The transparent plate 140 is movably disposed between the first holder 112 and the second holder 114 along the axis A1. The axis A1 is perpendicular to an optical axis OA (marked in FIG. 2 and FIG. 4) of the image capturing apparatus 124.

The transparent plate 140 and the brush component 130 are respectively located on two opposite sides of the first holder 112. The first holder 112 has an opening 112a (marked in FIG. 4). The opening 112a corresponds to the image capturing apparatus 124 and a part of the transparent plate 140. The brush component 130 has a contact portion 132. The contact portion 132 passes through the opening 112a to contact the transparent plate 140. The brush component 130 has a hole 130a (marked in FIG. 4). The hole 130a corresponds to the image capturing apparatus 124 and a part of the transparent plate 140. External light rays may pass through the hole 130a and the transparent plate 140 to reach the image capturing apparatus 124, and the dirt scraped off by the brush component 130 may be discharged through the hole 130a.

In the embodiment, a width W1 (marked in FIG. 2 and FIG. 3) of the transparent plate 140 along the axis A1 is greater than twice a width W2 (marked in FIG. 3) of the contact portion 132 along the axis A1. Accordingly, the brush component 130 is ensured to be able to clean a large range of the transparent plate 140 as the transparent plate 140 moves along the axis A1, so that the dirt on the transparent plate 140 is scraped off as much as possible.

In the embodiment, the driving assembly 150 includes a motor 152 and an active wheel 154. The motor 152 is coupled to the active wheel 154, for example, through a bevel gear or other appropriate means. The active wheel 154 is rotatably disposed on the second holder 114 and contacts the transparent plate 140. The motor 152 is used to drive the active wheel 154 to rotate, so that the active wheel 154 drives the transparent plate 140 to move along the axis A1 by the friction between the active wheel 154 and the transparent plate 140. The driving assembly 150 further includes two passive wheels 156. The passive wheels 156 are rotatably disposed on the second holder 114 and contact the transparent plate 140. During the process of the transparent plate 140 moving along the axis A1, the passive wheel 156 rotates with the transparent plate 140 due to the friction between the passive wheel 156 and the transparent plate 140, and the active wheel 154 and the passive wheels 156 jointly press the transparent plate 140 against the brush component 130, so that the transparent plate 140 can move stably and the transparent plate 140 is prevented from shaking or loosening during the driving process of the vehicle. In addition, in the embodiment, the friction between the active wheel 154 and the transparent plate 140 and the friction between the passive wheels 156 and the transparent plate 140 are, for example, greater than the friction between the brush component 130 and the transparent plate 140, so that the transparent plate 140 can be smoothly driven by the driving assembly 150 to move relative to the brush component 130.

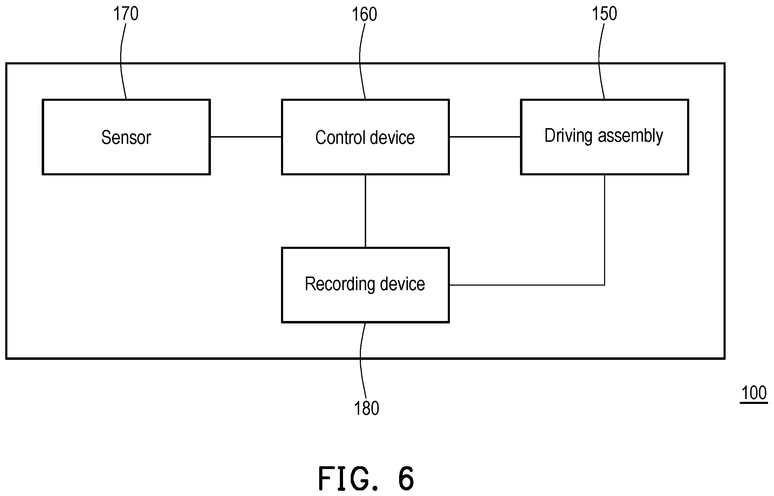

FIG. 6 is a block schematic view of some components of the image capturing module of FIG. 1. Please refer to FIG. 6. The image capturing module 100 of the embodiment further includes a control device 160. The control device 160 is, for example, a microcontroller unit (MCU) and is, for example, disposed on the substrate 122 and coupled to the driving assembly 150. After receiving a start command from a user interface, the control device 160 generates an activation signal based on that an image capturing quality of the image capturing device 120 is lower than a predetermined quality. The driving assembly 150 is used to drive the transparent plate 140 according to the activation signal. The control device 160 is used to generate a stop signal based on that an image capturing quality of the image capturing device 120 is higher than the predetermined quality. The driving assembly 150 is used to stop driving the transparent plate 140 according to the stop signal. Accordingly, whether to use the brush component 130 to clean the transparent plate 140 may be determined according to the image capturing quality of the image capturing device 120.

In addition, the control device 160 may, for example, control the driving assembly 150 to drive the transparent plate 140 at various different speeds to meet various cleaning requirements. Furthermore, the control device 160 may control the driving assembly 150 to drive the transparent plate 140 to move along a first direction D1 (marked in FIG. 2) parallel to the axis A1 and a second direction D2 (marked in FIG. 2) opposite to the first direction D1. That is, the control device 160 may control the driving assembly 150 to drive the transparent plate 140 to move back and forth along the axis A1.

Furthermore, the control device 160 may generate a control signal based on the transparent plate 140 continuously moving along the first direction D1 for a predetermined time length, and the driving assembly 150 controls the transparent plate 140 to move along the second direction D2 according to the control signal. Similarly, the control device 160 may generate a control signal based on the transparent plate 140 continuously moving along the second direction D2 for a predetermined time length, and the driving assembly 150 controls the transparent plate 140 to move along the first direction D1 according to the control signal. Accordingly, as long as an appropriate value of the predetermined time length is set for the control device 160, and the driving assembly 150 drives the transparent plate 140 at an appropriate speed, the transparent plate 140 can stably move back and forth.

Alternatively, the image capturing module 100 may further include a sensor 170 as shown in FIG. 6. The sensor 170 is coupled to the control device 160. The sensor 170 is used to sense that the transparent plate 140 moves along the first direction D1 to a predetermined state

(for example, the transparent plate 140 moves to an extreme position) to generate a sensing signal. The control device 160 is used to generate a control signal according to the sensing signal. The driving assembly 150 is used to drive the transparent plate 140 to move along the second direction D2 according to the control signal. Similarly, the sensor 170 is used to sense that the transparent plate 140 moves along the second direction D2 to a predetermined state (for example, the transparent plate 140 moves to another extreme position) to generate a sensing signal. The control device 160 is used to generate a control signal according to the sensing signal. The driving assembly 150 is used to drive the transparent plate 140 to move along the first direction D1 according to the control signal. Accordingly, the transparent plate 140 may stably move back and forth. The sensor 170 may be a contact sensor, an optical sensor, or other appropriate sensors capable of sensing that the transparent plate 140 reaches a predetermined position, which is not limited by the disclosure.

In addition, in the embodiment, the image capturing module 100 may further include a recording device 180 as shown in FIG. 6. The recording device 180 is, for example, a nonvolatile memory (NVM) and is coupled to the driving assembly 150 and the control device 160. The recording device 180 is used to record a cumulative driving number of the driving assembly 150. The control device 160 reads and checks the cumulative driving number every time the module is turned on, and the control device 160 generates a prompt signal based on the cumulative driving number reaching a predetermined value. The prompt signal may be displayed on the user interface to prompt the user to replace the brush component 130. The cumulative driving number may be the product of the rotational speed and the driving time length of the motor 152, which is not limited by the disclosure. Furthermore, as shown in FIG. 4, the brush component 130 of the embodiment is mounted on an outer side of the first holder 112 and partially protrudes toward the inner transparent plate 140 through the opening 112a, that is, the brush component 130 is configured to be assembled from the outside to the inside. Accordingly, a user may easily replace the brush component 130 by himself.

The image capturing module 100 of the embodiment is suitable for application at the front windshield of the vehicle due to the small space occupied, but the disclosure is not limited thereto. In other embodiments, the image capturing module 100 may also be applied to other parts of the vehicle.

The following example illustrates an operation process of the image capturing module 100 of the embodiment.

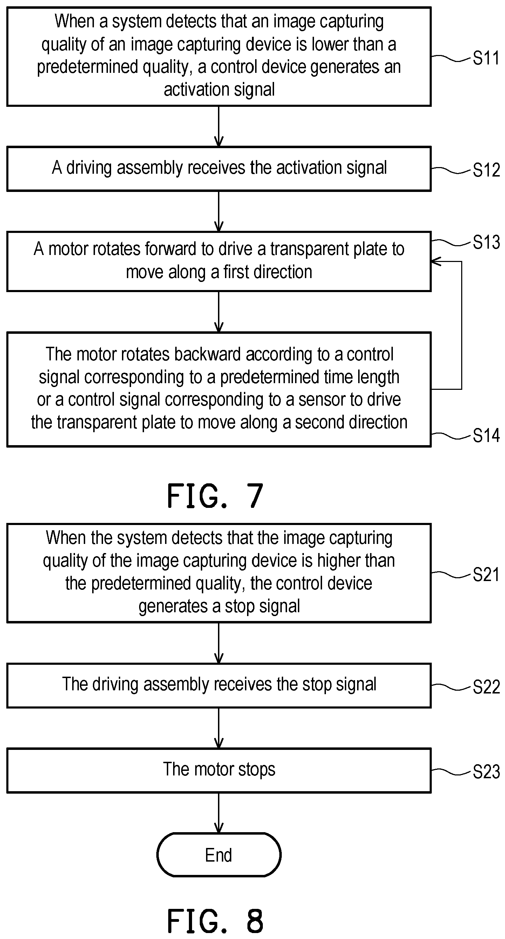

FIG. 7 and FIG. 8 are flowcharts of an operation of the image capturing module of FIG. 1. As shown in FIG. 7, when a system detects that the image capturing quality of the image capturing device 120 is lower than the predetermined quality, the control device 160 generates the activation signal (step S11). The driving assembly 150 receives the activation signal (step S12). The motor 152 rotates forward to drive the transparent plate 140 to move along the first direction D1 (step S13). The motor 152 rotates backward according to the control signal corresponding to the predetermined time length or the control signal corresponding to the sensor 170 to drive the transparent plate 140 to move along the second direction D1 (step S14). The motor 152 continuously performs step S13 and step S14 alternately according to the control signal corresponding to the predetermined time length or the control signal corresponding to the sensor 170. As shown in FIG. 8, when the system detects that the image capturing quality of the image capturing device 120 is higher than the predetermined quality, the control device 160 generates the stop signal (step S21). The driving assembly 150 receives the stop signal (step S22). The motor 152 stops (step S23).

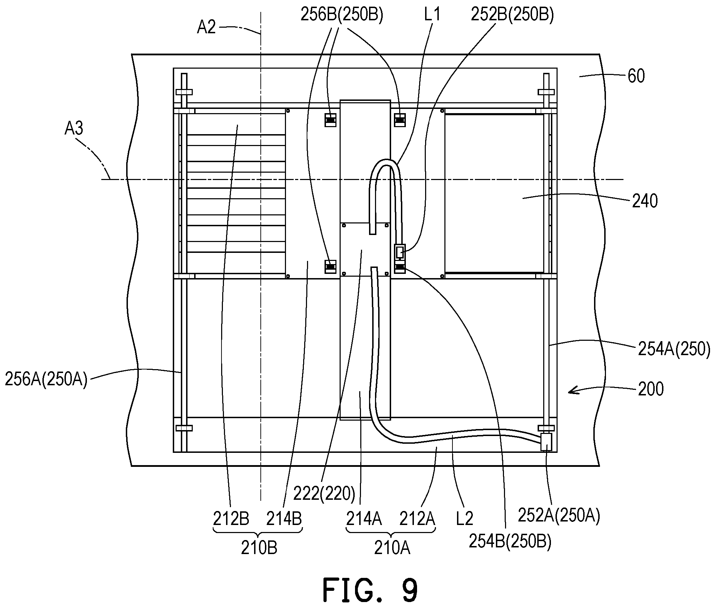

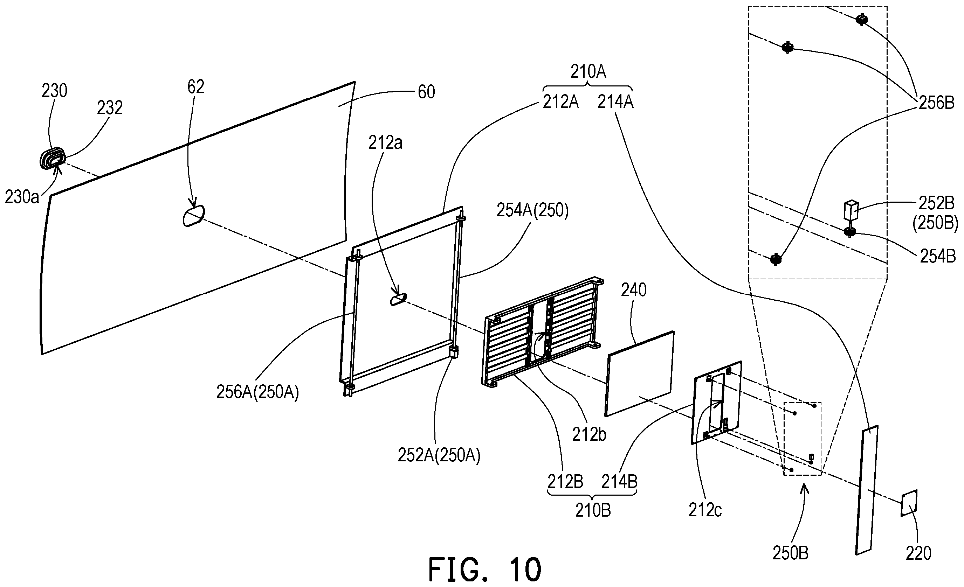

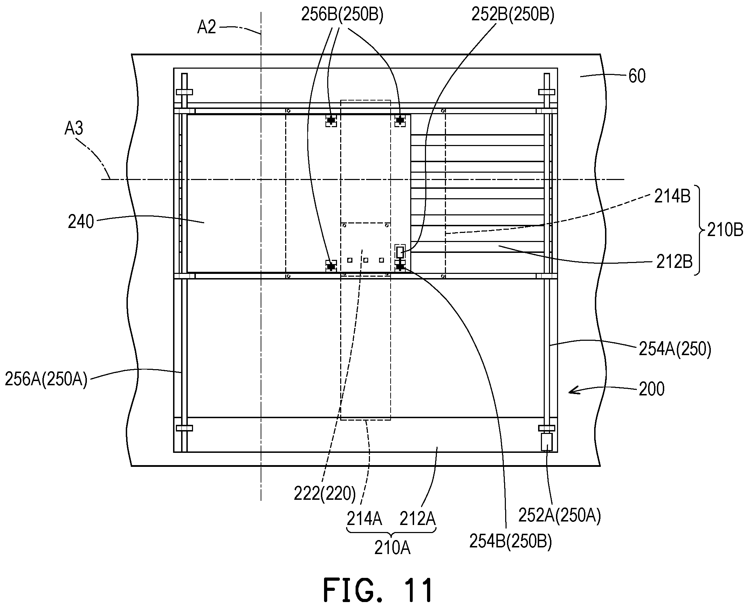

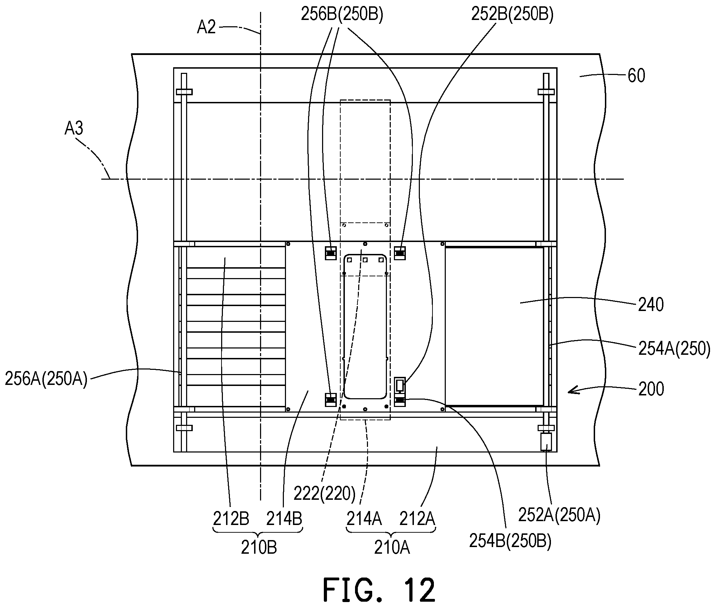

FIG. 9 shows an image capturing module installed on a rear shell of a vehicle according to another embodiment of the disclosure. FIG. 10 is an exploded view of the rear shell and the image capturing module of FIG. 9. FIG. 11 and FIG. 12 show a movement of a transparent plate of FIG. 9. Please refer to FIG. 9 and FIG. 10. An image capturing module 200 of the embodiment is, for example, installed on a rear shell 60 of a vehicle to capture an image of the rear of the vehicle. The image capturing module 200 is, for example, a panoramic camera for vehicle. The image capturing module 200 includes a main body 210A, a frame body 210B, an image capturing device 220, a brush component 230, a transparent plate 240, a first driving assembly 250A, and a second driving assembly 250B. The frame body 210B is movably disposed on the main body 210A along an axis A2. The image capturing device 220 is disposed on the main body 210A. The brush component 230 is, for example, a rubber member and is disposed on the main body 210A. The transparent plate 240 is, for example, a glass plate and is movably disposed on the frame body 210B along an axis A3 perpendicular to the axis A2 and contacts the brush component 230. The first driving assembly 250A is disposed on the main body 210A and is used to drive the frame body 210B to move along the axis A2 as shown in FIG. FIG. 11 and FIG. 12. The second driving assembly 250B is disposed on the frame body 210B and is used to drive the transparent plate 240 to move from a position shown in FIG. 9 to a position shown in FIG. 11 along the axis A3. By the mutual cooperation of the above driving manners of the first driving assembly 250A and the second driving assembly 250B, the transparent plate 240 may be moved in a zigzag trajectory, a Z-shaped trajectory, or a sawtooth trajectory.

As described above, in the image capturing module 200 of the embodiment, the transparent plate 240 as a surface of a camera is configured to be driven by the first driving assembly 250A and the second driving assembly 250B to move along the axes A2 and A3, and the image capturing module 200 is provided with the brush component 230 contacting the transparent plate 240. Accordingly, as the transparent plate 240 moves along the axes A2 and A3, the brush component 230 continuously contacts the transparent plate 240 and generates a relative displacement with the transparent plate 240 during the movement process of the transparent plate 240, so that dirt on the surface of the transparent plate 240 is scraped off by the brush component 230 to instantly clean the surface of the camera, so as to maintain clarity of an image captured by the image capturing module 200. Furthermore, since the image capturing module 200 of the embodiment is configured with the transparent plate 240 being movable and the brush component 230 being stationary, the case where a brush component moves and blocks the view of an image capturing device during a cleaning process will not happen, so that the image capturing module 200 can continuously capture images.

In detail, the main body 210A of the embodiment includes a first holder 212A and a second holder 214A. The first holder 212A is used to be installed on the rear shell 60, and the second holder 214A is mounted on the first holder 212A. The brush component 230 and the first driving assembly 250A are disposed on the first holder 212A. The image capturing device 220 is disposed on the second holder 214A. The frame body 210B includes a third holder 212B and a fourth holder 214B. The third holder 212B is movably disposed on the first holder 212A along the axis A2, and the fourth holder 214B is mounted on the third holder 212B. The transparent plate 240 is movably disposed between the third holder 212B and the fourth holder 214B along the axis A3. The second driving assembly 250B is disposed on the third holder 212B.

The rear shell 60, the first holder 212A, and the third holder 212B are located between the transparent plate 240 and the brush component 230, and the fourth holder 214B is located between the image capturing apparatus 220 and the transparent plate 240. The rear shell 60 has an opening 62 (marked in FIG. 10), the first holder 212A has an opening 212a (marked in FIG. 10), the third holder 212B has an opening 212b (marked in FIG. 10), and the fourth holder 214B has an opening 212c (marked in FIG. 10). The brush component 230 has a contact portion 232. The contact portion 232 passes through the openings 62, 212a, and 212b to contact the transparent plate 240. The brush component 230 has a hole 230a (marked in FIG. 10). External light rays may pass through the hole 230a, the transparent plate 240, and the opening 212c to reach the image capturing device 220, and the dirt scraped off by the brush component 230 may be discharged through the hole 230a.

In the embodiment, the first driving assembly 250A includes a motor 252A and an active worm 254A. The motor 252A is coupled to the active worm 254A. The active worm 254A is rotatably disposed on the first holder 212A and meshingly contacts the third holder 212B. The motor 252A is used to drive the active worm 254A to rotate, so as to drive the third holder 212B to move along the axis A2. The first driving assembly 250A further includes a passive worm 256A. The passive worm 256A is rotatably disposed on the first holder 212A and meshingly contacts the third holder 212B. During the process of the transparent plate 240 moving along the axis A2, the passive worm 256A rotates along due to the meshing between the passive worm 256A and the transparent plate 140, so that the transparent plate 240 can move stably.

In the embodiment, the second driving assembly 250B includes a motor 252B and an active wheel 254B. The motor 252B is coupled to the active wheel 254B. The active wheel 254B is rotatably disposed on the fourth holder 214B and contacts the transparent plate 240. The motor 252B is used to drive the active wheel 254B to rotate, so that the active wheel 254B drives the transparent plate 240 to move along the axis A3 by the friction between the active wheel 254B and the transparent plate 240. The second driving assembly 250B further includes two passive wheels 256B. The passive wheels 256B are rotatably disposed on the fourth holder 214B and contact the transparent plate 240. During the process of the transparent plate 240 moving along the axis A3, the passive wheels 256B rotate along due to the friction between the passive wheels 256B and the transparent plate 240, and the active wheel 254B and the passive wheels 256B jointly press the transparent plate 240 toward the brush component 230, so that the transparent plate 240 can move stably and prevent the transparent plate 240 from shaking or loosening during the driving process of the vehicle. In addition, in the embodiment, the friction between the active wheel 254B and the transparent plate 240 and the friction between the passive wheels 256B and the transparent plate 240 are, for example, greater than the friction between the brush component 230 and the transparent plate 240, so that the transparent plate 240 can be smoothly driven by the second driving assembly 250B to move relative to the brush component 230.

Please refer for FIG. 9. A signal line L2 is connected between a substrate 222 of the image capturing device 220 of the embodiment and the motor 252A, so that a control device (for example, a microcontroller unit (MCU)) on the substrate 222 may transmit a control signal to the motor 252A through the signal line L2. Similarly, a signal line L1 is connected between the substrate 222 of the image capturing device 220 and the motor 252B, so that a control device (for example, a microcontroller unit (MCU)) on the substrate 222 may transmit a control signal to the motor 252B through the signal line L1. Since the motor 252B is relatively displaced with the substrate 222 as the frame body 210B moves along the axis A2, a larger length must be reserved for the signal line L1.

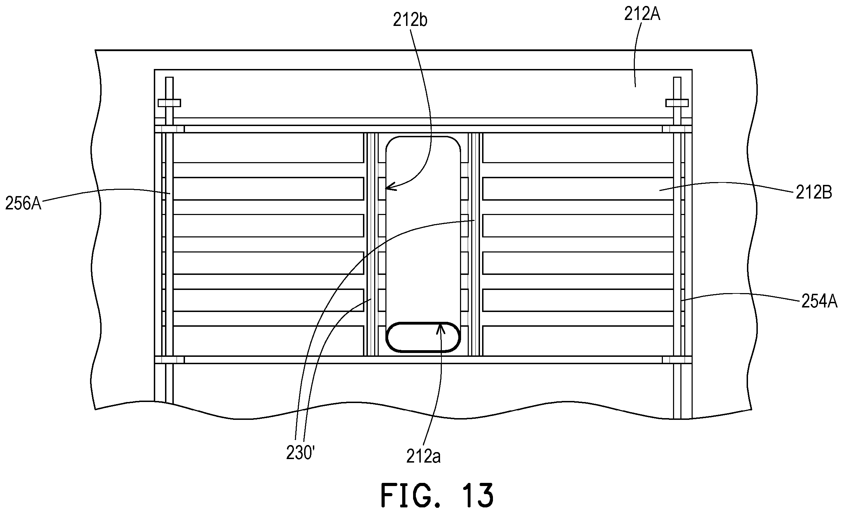

FIG. 13 shows some components of the image capturing module of FIG. 9. Please refer to FIG. 13. The image capturing module 200 (marked in FIG. 9) further includes two other brush components 230'. The brush components 230' are disposed on the third holder 212B and are used to contact the transparent plate 240 (marked in FIG. 9). Accordingly, the transparent plate 240 may be cleaned more thoroughly by the brush components 230'.

As described above, the main difference between the embodiment shown in FIG. 9 to FIG. 12 and the embodiment shown in FIG. 1 to FIG. 8 is that the image capturing module 200 shown in FIG. 9 to FIG. 12 may move the transparent plate 240 in two axial directions. The remaining configurations and functioning manners of the embodiment shown in FIG. 9 to FIG. 12 are the same as or similar to those of the embodiment shown in FIG. 1 to FIG. 8 and will not be described in detail herein.

The image capturing module 200 of the embodiment is applied to the rear shell of the vehicle to provide a rear view camera function, but the disclosure is not limited thereto. In other embodiments, the image capturing module 200 may also be applied to other parts of the vehicle.

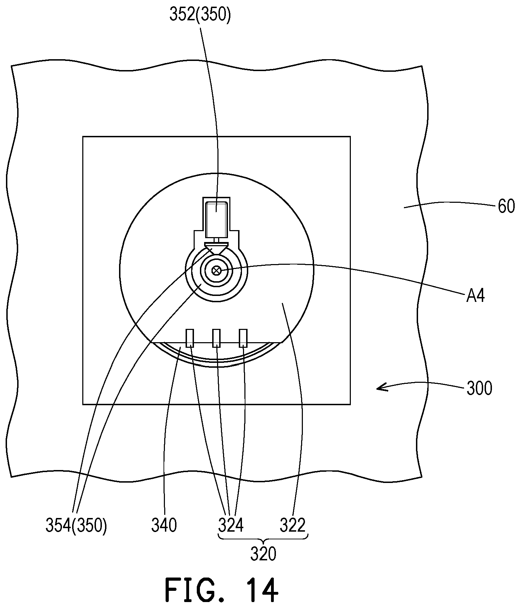

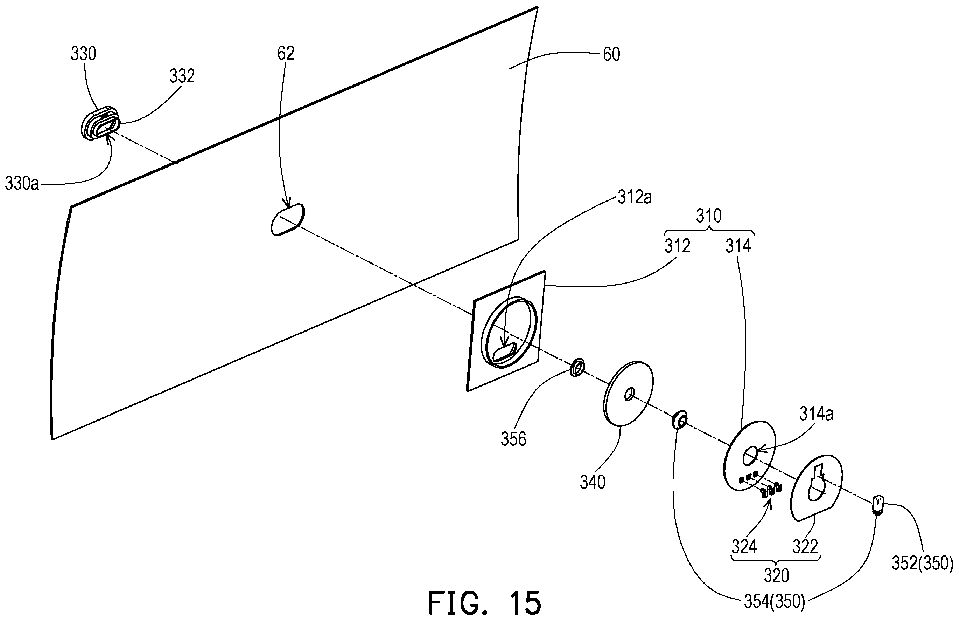

FIG. 14 shows an image capturing module installed on a rear shell of a vehicle according to another embodiment of the disclosure. FIG. 15 is an exploded view of the rear shell and the image capturing module of FIG. 14. Please refer to FIG. 14 and FIG. 15. An image capturing module 300 of the embodiment is, for example, installed on the rear shell 60 of the vehicle to capture the image of the rear of the vehicle. The image capturing module 300 is, for example, a panoramic camera for vehicle. The image capturing module 300 includes a main body 310, an image capturing device 320, a brush component 330, a transparent plate 340, and a driving assembly 350. The image capturing device 320 is disposed on the main body 310. The brush component 330 is disposed on the main body 310. The transparent plate 340 is rotatably disposed on the main body 310 along an axis A4 and contacts the brush component 330. The driving assembly 350 is disposed on the main body 310 and is used to drive the transparent plate 340 to rotate along the axis A4.

As described above, in the image capturing module 300 of the embodiment, the transparent plate 340 as the surface of the camera is configured to be driven by the driving assembly 350 to rotate with the axis A4 as the rotational axis, and the image capturing module 300 is provided with the brush component 330 contacting the transparent plate 340. Accordingly, as the transparent plate 340 rotates along the axis A4, the brush component 330 continuously contacts the transparent plate 340 and generates a relative displacement with the transparent plate 340 during the rotation process of the transparent plate 340, so that dirt on the surface of the transparent plate 340 is scraped off by the brush component 330 to instantly clean the surface of the camera, so as to maintain clarity of an image captured by the image capturing module 300. Furthermore, since the image capturing module 300 of the embodiment is configured with the transparent plate 340 being movable and the brush component 330 being stationary, the case where a brush component moves and blocks the view of an image capturing device during a cleaning process will not happen, so that the image capturing module 300 can continuously capture images.

In detail, the main body 310 of the embodiment includes a first holder 312 and a second holder 314. The first holder 312 is, for example, used to be mounted on the rear shell 60. The second holder 314 is mounted on the first holder 312 and has an opening 314a (marked in FIG. 15). The brush component 330 is disposed on the first holder 312. The image capturing device 320 includes a substrate 322 and multiple image capturing apparatuses 324. The substrate 322 is disposed on the second holder 314. The image capturing apparatuses 324 are disposed on the substrate 322 and correspond to the opening 314a. The driving assembly 350 is disposed on the second holder 314. The transparent plate 340 is rotatably disposed between the first holder 312 and the second holder 314 along the axis A4.

The transparent plate 340 and the brush component 330 are respectively located on two opposite sides of the first holder 312. The first holder 312 has an opening 312a (marked in FIG. 15), and the opening 312a corresponds to the image capturing apparatus 324 and a part of the transparent plate 340. The brush component 330 has a contact portion 332. The contact portion 332 passes through the opening 62 of the rear shell 60 and the opening 312a of the first holder 312 to contact the transparent plate 340. The brush component 330 has a hole 330a (marked in FIG. 15). The hole 330a corresponds to the image capturing apparatus 324 and a part of the transparent plate 340. External light rays may pass through the hole 330a and the transparent plate 340 to reach the image capturing apparatus 324, and the dirt scraped off by the brush component 330 may be discharged through the hole 330a.

In the embodiment, the driving assembly 350 includes a motor 352 and a bevel gear set 354. The bevel gear set 354 is coupled between the motor 352 and the transparent plate 340. The motor 352 is used to drive the bevel gear set 354 to rotate, so as to drive the transparent plate 340 to rotate along the axis A4. The bevel gear set 354 and a clamping member 356 are respectively located at two opposite sides of the transparent plate 340 and are fixed to each other. The transparent plate 340 is clamped between the bevel gear set 354 and the clamping member 356 and may firmly rotate along with the bevel gear set 354. In other embodiments, the motor 352 may drive the transparent plate 340 to rotate through other types of transmission components, which is not limited by the disclosure.

As described above, the main difference between the embodiment shown in FIG. 14 and FIG. 15 and the embodiment shown in FIG. 1 to FIG. 8 is that the image capturing module 300 shown in FIG. 14 and FIG. 15 may move the transparent plate 240 in a rotational manner. The remaining configurations and functioning manners of the embodiment shown in FIG. 14 and FIG. 15 are the same as or similar to those of the embodiment shown in FIG. 1 to FIG. 8 and will not be described in detail herein.

The image capturing module 300 of the embodiment is applied to the rear shell of the vehicle to provide a rear view camera function, but the disclosure is not limited thereto. In other embodiments, the image capturing module 300 may also be applied to other parts of the vehicle.

In summary, in the image capturing module of the disclosure, the transparent plate as the surface of the camera is configured to be driven by the driving assembly to move along the axis, and the image capturing module is provided with the brush component contacting the transparent plate. Accordingly, as the transparent plate moves along the axis, the dirt on the surface of the transparent plate is scraped off by the brush component to instantly clean the surface of the camera, so as to maintain the clarity of the image captured by the image capturing module. Furthermore, since the image capturing module of the disclosure is configured with the transparent plate being movable and the brush component being stationary, the case where a brush component moves and blocks the view of an image capturing device during a cleaning process will not happen, so that the image capturing module can continuously capture images.

## Claims

1. An image capturing module (100), comprising:
a main body (110);
an image capturing device (120), disposed on the main body (110);
a brush component (130), disposed on the main body (110);
a transparent plate (140), movably disposed on the main body (110) along an axis and having a surface, wherein the surface contacts the brush component (130), and a normal direction of the surface is substantially orthogonal to the axis; and
a driving assembly (150), disposed on the main body (110) and used to drive the transparent plate (140) to move back and forth along the axis.

2. The image capturing module (100) according to claim 1, wherein the main body (110) comprises a first holder (112) and a second holder (114), the second holder (114) is mounted on the first holder (112), the brush component (130) is disposed on the first holder (112), the image capturing device (120) and the driving assembly (150) are disposed on the second holder (114), and the transparent plate (140) is movably disposed between the first holder (112) and the second holder (114) along the axis.

3. The image capturing module (100) according to claim 1, wherein the driving assembly (150) comprises a motor (152) and an active wheel (154), the motor (152) is coupled to the active wheel (154), the active wheel (154) is rotatably disposed on the main body (110) and contacts the transparent plate (140), and the motor (152) is used to drive the active wheel (154) to rotate to drive the transparent plate (140) to move along the axis.

4. The image capturing module (100) according to claim 1, further comprising a control device (160), wherein the control device (160) is coupled to the driving assembly (150), and the control device (160) is used to control the driving assembly (150) to drive the transparent plate (140) to move along a first direction and a second direction opposite to the first direction.

5. The image capturing module (100) according to claim 1, wherein the image capturing module (100) is a panoramic camera for vehicle.

6. An image capturing module (200), comprising:
a main body (210A);
an image capturing device (220), disposed on the main body (210A);
a brush component (230), disposed on the main body (210A);
a frame body (210B), movably disposed on the main body (210A) along an axis;
a transparent plate (240), movably disposed on the frame body (210B) along another axis and contacting the brush component (230);
a first driving assembly (250A), disposed on the main body (210A) and used to drive the frame body (210B) to move along the axis; and
a second driving assembly (250B), disposed on the frame body (210B) and used to drive the transparent plate (240) to move along the another axis.

7. The image capturing module (200) according to claim 6, wherein the main body (210A) comprises a first holder (212A) and a second holder (214A), the second holder (214A) is mounted on the first holder (212A), the brush component (230) and the first driving assembly (250A) are disposed on the first holder (212A), and the image capturing device (220) is disposed on the second holder (214A).

8. The image capturing module (200) according to claim 7, wherein the frame body (210B) comprises a third holder (212B) and a fourth holder (214B), the third holder (212B) is movably disposed on the first holder (212A) along the axis, the fourth holder (214B) is mounted on the third holder (212B), the transparent plate (240) is movably disposed between the third holder (212B) and the fourth holder (214B) along the another axis, and the second driving assembly (250B) is disposed on the third holder (212B).

9. The image capturing module (200) according to claim 6, wherein the first driving assembly (250A) comprises a motor (252A) and an active worm (254A), the motor (252A) is coupled to the active worm (254A), the active worm (254A) is rotatably disposed on the main body (210A) and contacts the frame body (210B), and the motor (252A) is used to drive the active worm (254A) to rotate to drive the frame body (210B) to move along the axis.

10. The image capturing module (200) according to claim 6, wherein the second driving assembly (250B) comprises a motor (252B) and an active wheel (254B), the motor (252B) is coupled to the active wheel (254B), the active wheel (254B) is rotatably disposed on the frame body (210B) and contacts the transparent plate (240), and the motor (252B) is used to drive the active wheel (254B) to rotate to drive the transparent plate (240) to move along the another axis.

11. The image capturing module (200) according to claim 6, wherein the image capturing module (200) is a panoramic camera for vehicle.

12. An image capturing module (300), comprising:
a main body (310);
an image capturing device (320), disposed on the main body (310);
a brush component (330), disposed on the main body (310);
a transparent plate (340), rotatably disposed on the main body (310) along an axis and contacting the brush component (330); and
a driving assembly (350), disposed on the main body (310) and used to drive the transparent plate (340) to rotate along the axis.

13. The image capturing module (300) according to claim 12, wherein the main body (310) comprises a first holder (312) and a second holder (314), the second holder (314) is mounted on the first holder (312), the brush component (330) is disposed on the first holder (312), the image capturing device (320) and the driving assembly (350) are disposed on the second holder (314), and the transparent plate (340) is rotatably disposed between the first holder (312) and the second holder (314) along the axis.

14. The image capturing module (300) according to claim 12, wherein the driving assembly (350) comprises a motor (352) and a bevel gear set (354), the bevel gear set (354) is coupled between the motor (352) and the transparent plate (340), and the motor (352) is used to drive the bevel gear set (354) to rotate to drive the transparent plate (340) to rotate along the axis.

15. The image capturing module (300) according to claim 12, wherein the image capturing module (300) is a panoramic camera for vehicle.

## Amended claims

### Amended claims in accordance with Rule 137(2) EPC.

1. An image capturing module (200), comprising:
a main body (210A);
an image capturing device (220), disposed on the main body (210A);
a brush component (230), disposed on the main body (210A);
a frame body (210B), movably disposed on the main body (210A) along an axis;
a transparent plate (240), movably disposed on the frame body (210B) along another axis and contacting the brush component (230);
a first driving assembly (250A), disposed on the main body (210A) and used to drive the frame body (210B) to move along the axis; and
a second driving assembly (250B), disposed on the frame body (210B) and used to drive the transparent plate (240) to move along the another axis.

2. The image capturing module (200) according to claim 1, wherein the main body (210A) comprises a first holder (212A) and a second holder (214A), the second holder (214A) is mounted on the first holder (212A), the brush component (230) and the first driving assembly (250A) are disposed on the first holder (212A), and the image capturing device (220) is disposed on the second holder (214A).

3. The image capturing module (200) according to claim 2, wherein the frame body (210B) comprises a third holder (212B) and a fourth holder (214B), the third holder (212B) is movably disposed on the first holder (212A) along the axis, the fourth holder (214B) is mounted on the third holder (212B), the transparent plate (240) is movably disposed between the third holder (212B) and the fourth holder (214B) along the another axis, and the second driving assembly (250B) is disposed on the third holder (212B).

4. The image capturing module (200) according to claim 1, wherein the first driving assembly (250A) comprises a motor (252A) and an active worm (254A), the motor (252A) is coupled to the active worm (254A), the active worm (254A) is rotatably disposed on the main body (210A) and contacts the frame body (210B), and the motor (252A) is used to drive the active worm (254A) to rotate to drive the frame body (210B) to move along the axis.

5. The image capturing module (200) according to claim 1, wherein the second driving assembly (250B) comprises a motor (252B) and an active wheel (254B), the motor (252B) is coupled to the active wheel (254B), the active wheel (254B) is rotatably disposed on the frame body (210B) and contacts the transparent plate (240), and the motor (252B) is used to drive the active wheel (254B) to rotate to drive the transparent plate (240) to move along the another axis.

6. The image capturing module (200) according to claim 1, wherein the image capturing module (200) is a panoramic camera for vehicle.
